# EUROPEAN PATENT APPLICATION

(11) **EP 1 464 847 A2**
(43) Date of publication of application: **06.10.2004**
(21) Application number: 04006753.0
(22) Date of filing: 20.03.2004
(51) Int. Cl.: F16B 7/00, F16B 3/00

(54) **Tubular assembly**

(30) Priority: 03.04.2003 US 406485
(71) Applicant: Bayer Polymers LLC, Pittsburgh, PA 15205 (US)
(72) Inventor: Zoellner, Olaf J., 51375 Leverkusen (DE)
(74) Representative: Perchenek, Nils, Dr.

(57) **Abstract**

A tubular assembly which includes a first (or outer) tube (12), a second tube (21) is described. A portion of the second tube (21) resides within the first tube (12). The first tube (12) has a plurality of perforations (15) having edges (18), and the exterior surface (32) of the second tube (21) has a plurality of indentations (24), at least some of which are aligned with the perforations (15) in the first tube (12). Alternatively, or in addition thereto, the interior surface (35) of the first tube (12) has a plurality of indentations (59), at least some of which are aligned with a plurality of perforations (47) having edges (50) in the second tube (21). The tubular assembly is prepared by molding plastic material (e.g., thermoplastic material) through at least some of the perforations (e.g., in the first tube) into and at least partially filling the indentations aligned therewith (e.g., in the exterior surface of the second tube). The first and second tubes are fixedly attached one to the other by means of the edges of the perforations in one tube being embedded in the plastic material extending therethrough and at least partially filling the aligned indentation of the other tube.

## Description

### DESCRIPTION OF THE INVENTION

The present invention relates to a tubular assembly that includes a second (or inner) tube, a portion of which resides within a first (or outer) tube. The first tube has a plurality of perforations having edges, and the exterior surface of the second tube has a plurality of indentations, at least some of which are aligned with the perforations in the first tube. Alternatively, or in addition thereto, the interior surface of the first tube has a plurality of indentations, at least some of which are aligned with a plurality of perforations having edges in the second tube. The tubular assembly is prepared by molding plastic material (e.g., thermoplastic material) through at least some of the perforations (in the first and/or second tubes) into and at least partially filling the aligned indentations (in the respective first and/or second tubes). The edges of the perforations become embedded in the plastic material extending there through, thereby fixedly attaching the first and second tubes together.

Tubular frames are often used in support structures for the purpose of providing a combination of desirable physical properties, such as rigidity and stability, with a reduction in weight, relative to solid or more solid support structures. Support structures that make use of tubular frames include, for example, chairs (e.g., aircraft and automotive seats), wheel chairs, aircraft and automotive space frames, and motorcycle and bicycle frames.

Tubular frames typically include a plurality of tubular members that are assembled together by means including, for example, welding, brazing, soldering, crimping, gluing, and/or screwing the ends of the tubular members together. In addition, fasteners, such as rivets, may be used to join the ends of the tubular members together. The weakest point of a tubular frame is typically the point where the ends of the tubular members are connected together. When placed under load (e.g., cyclical loading): welds, brazings and solder points can crack; crimped and screwed tube ends can come undone; and adhesives and fasteners can fail, e.g., crack or shear.

It would be desirable to develop tubular assemblies that provide a combination of desirable physical properties, such as strength and rigidity, with light weight. In addition, it would be desirable that such newly developed tubular assemblies have tubular connection points that have improved resistance to failure under load.

United States Patent Number 4,541,649 discloses a connection between at least one first tube and a second tube of a bicycle frame. The first tube of the connection of the '649 patent has a flared terminus that is in engagement with the outer surface of the second tube. An injection-molded one-piece plastic casing fully surrounds the end portion of the first tube and fully surrounds a circumferential portion of the outer surface of the second tube in the zone of the engagement of the flared terminus of the first tube with the second tube.

United States Patent Numbers 5,797,613 and 5,865,456 disclose a flex joint for a vehicle frame (e.g., a bicycle frame). The flex joint includes a flexible member of durable material (e.g., a metal plate), an encasement surrounding the flexible member (e.g., of nylon), and bores through ends of the flex joint. The ends of the flex joint of the '613/'456 patent are disclosed as being inserted within a circular frame end having openings (e.g., openings 119). Shoulder pins are disclosed as being inserted into the bores of the flex joint through the openings in the circular frame ends.

United States Patent Number 5,937,496 discloses plastic connection elements (having recesses) for tubular frames. The plastic connection elements of the '496 patent are inserted within a hollow end of a tubular element, and the tubular element is deformed relative to the recesses of the plastic connection element, thus forming a tight fit there between.

United States Patent Number 5,404,630 discloses a method of joining a frame tube to a lug. The method of the '630 patent includes: forming through-holes in the lug; inserting a frame tube into the lug; deforming the frame tube such that outward projections are formed therefrom that engage the through-holes in the lug; placing a reinforcing tube within the frame tube; and deforming the reinforcing tube such that outward projections are formed therefrom that engage with the inside wall of the frame tube.

In accordance with the present invention, there is provided a tubular assembly comprising:
(a) a first tube having interior and exterior surfaces; and
(b) a second tube having interior and exterior surfaces, a portion of said second tube residing within a portion of said first tube,
wherein at least one of,
(i) said first tube has a plurality of perforations having edges, and the exterior surface of said second tube has a plurality of indentations therein, at least some of said perforations and said indentations being aligned, and
(ii) the interior surface of said first tube has a plurality of indentations therein, and said second tube has a plurality of perforations having edges, at least some of said perforations and said indentations being aligned,
further wherein, said tubular assembly is prepared by a process comprising molding plastic material through at least some of said perforations and into said aligned indentations, the edges of said perforations being embedded in the plastic material extending therethrough, thereby fixedly attaching said first tube and said second tube together.

The features that characterize the present invention are pointed out with particularity in the claims, which are annexed to and form a part of this disclosure. These and other features of the invention, its operating advantages and the specific objects obtained by its use will be more fully understood from the following detailed description and accompanying drawings.

Unless otherwise indicated, all numbers or expressions, such as those expressing structural dimensions, process conditions, etc. used in the specification and claims are understood as modified in all instances by the term "about."

### BRIEF DESCRIPTION OF THE DRAWINGS

Figure 1 is a representative sectional view of a tubular assembly according to the present invention in which the second (or inner) tube has an indentation in its exterior surface that is aligned with a perforation in the first (or outer) tube;
Figure 2 is a representative sectional view of a tubular assembly of the present invention in which the interior surface of the first tube has an indentation that is aligned with a perforation in the second tube;
Figure 3 is a representative sectional view of a tubular assembly similar to that of Figure 1, but in which a portion of the exterior surface of the first tube is encased with molded on plastic material;
Figure 4 is a representative sectional view of a tubular assembly similar to that of Figure 2 in which a portion of the interior surface of the second tube is encased with molded on plastic material;
Figure 5 is a representative sectional view of a tubular assembly similar to that of Figure 1, which further includes an annular space between the first and second tubes that at least is partially filled with molded on plastic material;
Figure 6 is a representative sectional view of a tubular assembly similar to that of Figure 1, in which the perforation in the first tube has deformed edge portions;
Figure 7 is a representative perspective view of a tubular assembly according to the present invention, in which a partial cut-away through the first tube reveals an annular groove in the exterior surface of the underlying second tube; and
Figure 8 is a representative perspective sectional view of a tubular assembly according to the present invention.

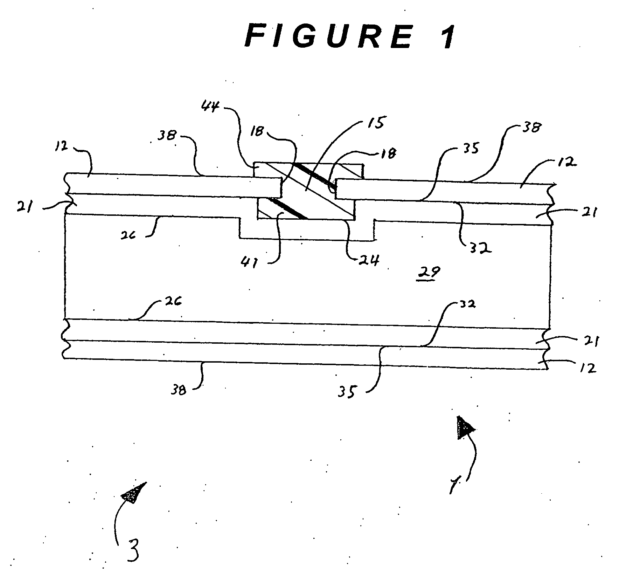

In Figures 1 through 8, like reference numerals and characters designate the same components and structural features.

### DETAILED DESCRIPTION OF THE INVENTION

Referring now to Figure 1 of the drawing figures, there is shown a representative sectional view of a tubular assembly 3 according to the present invention. More particularly, Figure 1 depicts an overlap connection region 1 of tubular assembly 3. Tubular assembly 3 includes a first (or outer) tube 12 having perforations 15. Each perforation 15 has (and is defined by) edges 18. Tubular assembly 3 also includes a second (or inner) tube 21 having an exterior surface 32 having indentations 24 therein. At least one indentation 24 in second tube 21 is aligned with a perforation 15 in first tube 12. A portion of second tube 21 resides within a portion of first tube 12 (i.e., overlap connection region 1). The interior surfaces 26 of second tube 21 defines an interior passage 29 therein.

A portion of the exterior surfaces 32 of second tube 21 abut the inner surfaces 35 of first tube 12. In an embodiment of the present invention, only a portion of exterior surface 32 of second tube 21 abuts inner surface 35 of first tube 12, in the overlap region 1 of the two tubes (not shown). Such a partial abutment between the tubes can be achieved, for example, by means of raised portions (such as ribs or bumps) on exterior surface 32 of second tube 21 that are in abutment with inner surface 35 of first tube 12 (not shown). Alternatively, or in addition to raised portions on exterior surface 32 of second tube 21, inner surface 35 of first tube 12 may have raised portions (such as bumps or ribs) that abut exterior surface 32 of second tube 21 (not shown).

First tube 12, and second tube 21 may each independently be selected from, for example, substantially cylindrical tubes, substantially elliptical tubes, polygonal tubes (e.g., square tubes, rectangular tubes, pentagonal tubes, hexagonal tubes, heptagonal tubes, octagonal tubes, etc.), and combinations thereof (e.g., tubes having substantially cylindrical terminal portions connected by means of a polygonal tubular section). Preferably, first tube 12 and second tube 21 are each selected from substantially cylindrical tubes. Further preferably, the overlap connection region of first and second tubes 12 and 21 is comprised of substantially cylindrical first and second tube portions.

Plastic material 41 is molded through perforation 15 of first tube 12 and into indentation 24 in second tube 21. Plastic material 41 at least partially, and preferably substantially completely fills indentation 24. Edges 18 of perforation 15 are embedded in plastic material 41 extending through perforation 15. First tube 12 and second tube 21 are fixedly attached one to the other by means of the plastic material 41 that at least partially fills indentation 24 and embeds edges 18 of perforation 15.

In an embodiment of the present invention, plastic material 41 extending through perforation 15 and filling indentation 24 is continuous with a molded on plastic attachment head 44 on exterior surface 38 of first tube 12. Attachment head 44, the plastic material 41 filling indentation 24 and embedding perforation 15 edges 18 therein together serve to fixedly attach first tube 12 and second tube 21 together.

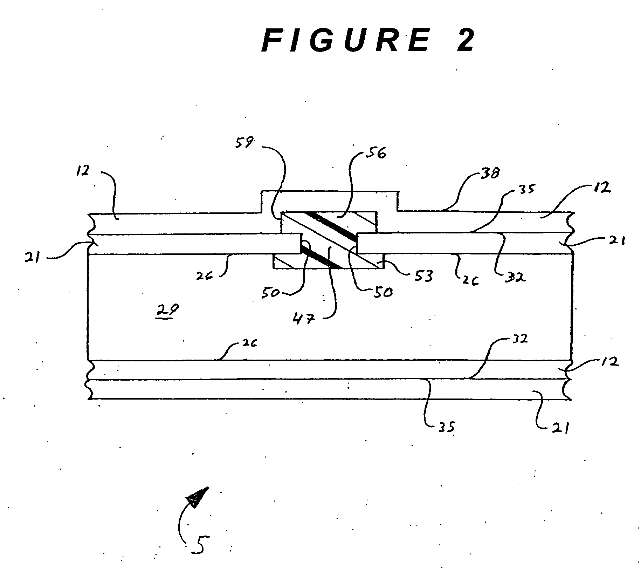

With reference to Figure 2, a further embodiment of the present invention is depicted. Second tube 21 of tubular assembly 5 has a perforation 47 having (and being defined by) edges 50, which is aligned with an indentation 59 in exterior surface 35 of first tube 12. Plastic material 56 is molded through perforation 47 in second tube 21, and at least partially, and preferably substantially completely, fills indentation 59 in first tube 12. The plastic material 56 extending into and at least partially filling indentation 59 also embeds edges 50 of perforation 47 therein, and thus serves to fixedly attach first tube 12 and second tube 21 together.

Plastic material 56 extending through perforation 47 and filling indentation 59 is continuous with a molded on plastic attachment head 53 on interior surface 26 of second tube 21, in an embodiment of the present invention. Attachment head 53, the plastic material 56 filling indentation 59 and embedding edges 50 of perforation 47 therein together serve to fixedly attach first tube 12 and second tube 21 together.

As used herein and in the claims the term "aligned" as used with regard to the aligned indentations and perforations (e.g., indentations 24 and perforations 15; and/or indentations 59 and perforations 47) is meant to be inclusive of partially aligned indentations and substantially aligned indentations (e.g., those indentations that are substantially coaxially aligned with the perforations in the other tube).

The indentations (e.g., 24 and 59) of the first and/or second tubes of the tubular assemblies according to the present invention typically are of (or have) larger dimensions (e.g., cross sectional dimensions) than the dimensions of the perforations (e.g., 15 and 47) of the other tube aligned therewith. For example, and with reference to Figure 1, when aligned perforations 15 and indentations 24 each have a substantially circular cross section, the diameters of indentations 24 are larger than the diameters of aligned perforations 15.

As discussed previously herein, the tubular assemblies of the present invention are prepared by means of molding plastic material (e.g., plastic material 41) through perforations (e.g., perforation 15) in the tubes and into indentations (e.g., indentation 24) in the other tube that are aligned therewith. As used herein and in the claims, the term "molding plastic material" and similar terms, such as "molded on" relative to introducing plastic material through the aligned perforations and into the aligned indentations, is inclusive of: (i) processes that involve the use of a mold (e.g., injection molding and reaction injection molding); and (ii) processes that do not involve the use of a mold. Processes that do not involve the use of a mold include, for example, pouring molten thermoplastic material (or a liquid thermosetting plastic composition) through the aligned perforations and into the aligned cavities.

Tubular assemblies according to the present invention can provide improvements over prior tubular assemblies, as discussed previously herein. For example, and with reference to Figure 1, when under load (e.g., cyclical loads) failure between plastic material 41 and edges 18 of perforation 15 embedded therein is less likely to occur, due in part to the tight and continuous fit there between. For example, when the tubular assembly of the present invention is under load, plastic material 41 can absorb stresses that would otherwise be born by edges 18 alone, e.g., if edges 18 were alone crimped into indentation 24 or another perforation in second tube 21 aligned therewith (not shown).

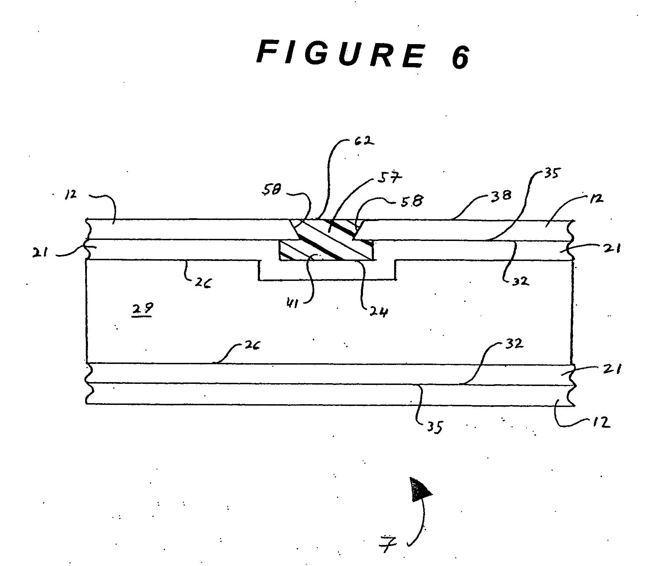

At least some of the perforations of the first and/or second tubes may have deformed edge portions, in an embodiment of the present invention. With reference to Figure 6, an overlap region 7 of a tubular assembly according to the present invention is depicted. Perforation 57 of first tube 12 is defined by deformed edge portions 58, which are embedded in the plastic material 41 extending therethrough and into aligned indentation 24 in exterior surface 32 of second tube 21. The plastic material 41 extending through perforation 57 (and filling indentation 24) is continuous with attachment head 62, which is substantially flush with exterior surface 38 of first tube 12.

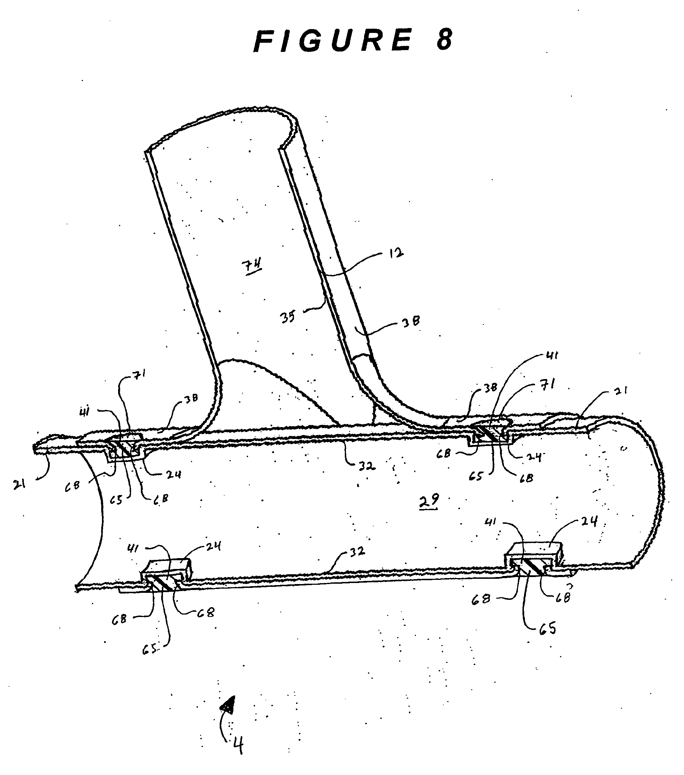

A perspective sectional view of a tubular assembly 4 according to the present invention, that is in the form of a T-junction, is depicted with reference to Figure 8. A portion of the interior surface 35 of first tube 12 defines a cylindrical space or passage 74 therein. First tube 12 has perforations 65 that are defined by deformed edge portions 68. Deformed edges 68 of perforations 65 are embedded in molded plastic material 41 that extends therethrough and fills indentation 24 in the exterior surface 35 of second tube 21. The plastic material 41 extending through perforations 65 into aligned indentations 24 is continuous with attachment heads 71 which are substantially flush with exterior surface 38 of first tube 12.

The deformed edge portions of the aligned perforations of the tubular assemblies according to the present invention may have numerous configurations. The deformed edge portions may have configurations selected from, for example, beveled configurations (e.g., as depicted in Figure 6), crimped configurations (e.g., as depicted in Figure 8), bent configurations and combinations thereof. Crimped edge portions include, for example, folding one edge portion (e.g., edge 68 of perforation 65 in first tube 12) into the indentation aligned therewith (e.g., indentation 24 of second tube 21). Deformed edge portions may be formed in accordance with known methods, such as those disclosed in United States Patent No.'s 5,842,265 and 5,940,949.

The indentations in the tubes of the tubular assemblies of the present invention may have numerous configurations. The indentations may be selected from, for example cubical indentations (e.g., square-cubical and recta-cubical indentations) and hemispherical or parabolic indentations. The indentations in the tubes may be formed by means known to the skilled artisan, including, for example, drawing techniques (e.g., in the case of metal tubes), molding methods (e.g., in the case of plastic tubes) and machining methods.

While tubular assemblies of the present invention may have indentations in both the first and second tubes, and perforations in the first and second tubes aligned therewith, preferably one of tubes has indentations and the other tube has perforations. In a preferred embodiment, the perforations (e.g., 15) are located in the first tube (e.g., 12) and the indentations (e.g., 24) are located in the second tube (e.g., 21), and the first tube contains no indentations, and the second tube contains no perforations.

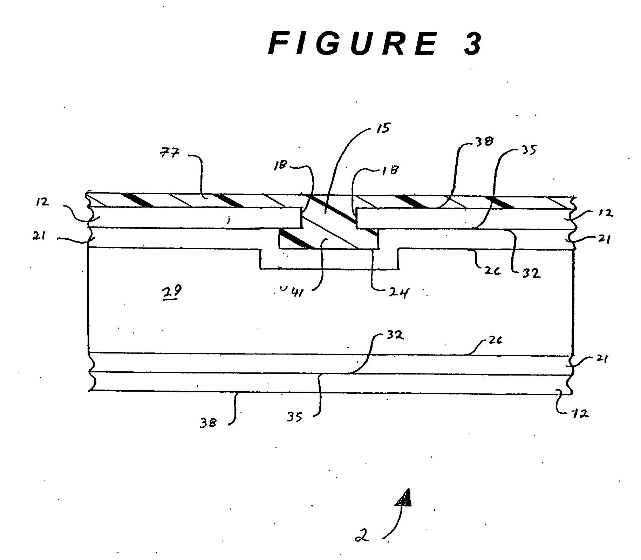

The molded on plastic material, extending through the perforations of the first and/or second tubes and into the indentations of the other tube aligned therewith, is continuous with molded on plastic material encasing at least a portion of the exterior surface of the first tube and/or at least a portion of the interior surface of the second tube, in an embodiment of the present invention. With reference to Figure 3, a sectional view of an overlap region 2 of a tubular assembly according to the present invention is depicted, which includes molded on plastic material 77 encasing at least a portion of the exterior surface 38 of first tube 12. Plastic material 77 is continuous with plastic material 41 filling indentations 24 in second tube 21 and embedding edges 18 of perforation 15 of first tube 12. In addition to enhancing the fixed attachment of first and second tubes 12 and 21 together, plastic material 77 also protects exterior surface 38 of first tube 12 from, for example, impacts and corrosion. In a further embodiment, molded on plastic material 77 has a textured surface (not shown) that improves gripping of such surface by, for example, a human hand.

Plastic material 77 may be molded onto exterior surface 38 of first tube 12 concurrently with or subsequent to the molding of plastic material 41 through perforation 15 into indentation 24. Encasing plastic material 77 may be the same or different (preferably the same) as plastic material 41 filling indentation 24.

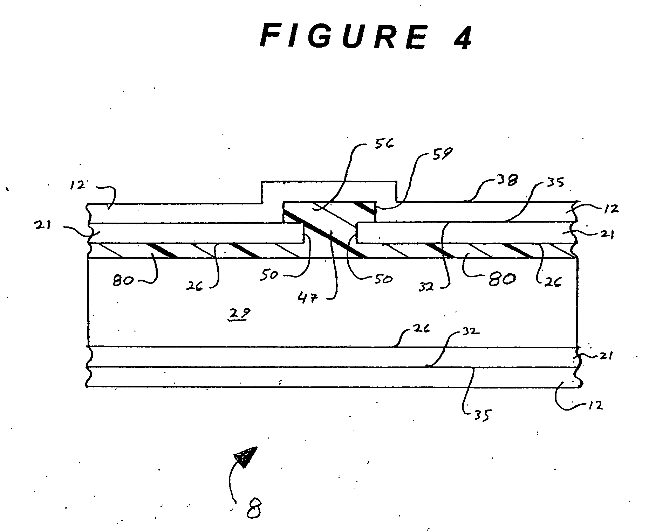

With reference to Figure 4, a sectional view of an overlap region 8 of a tubular assembly according to the present invention is depicted, which includes molded on plastic material 80 encasing at least a portion of the interior surface 26 of second tube 21. Plastic material 80 is continuous with plastic material 56 filling indentation 59 in first tube 12 and embedding edges 50 of perforation 47 therein. In addition to enhancing the fixed attachment of first and second tubes 12 and 21 together, plastic material 80 also protects interior surface 26 of second tube 21 from, for example, impacts and corrosion.

Plastic material 80 may be molded onto interior surface 26 of second tube 21 concurrently with or subsequent to the molding of plastic material 56 through perforation 47 into indentation 59. Encasing plastic material 80 may be the same or different (preferably the same) as plastic material 56 filling indentation 59.

Tubular assemblies according to the present invention are typically prepared by methods that are known to the skilled artisan. Typically, a portion of second tube 21 is inserted within first tube 12 such that at least some of the perforations and indentations of the tubes are aligned one with the other. For example, overlap region 3 of tubular assembly 1 of Figure 1 may be placed in a mold, and plastic material is molded through perforation 15 into indentation 24. Plastic attachment head 44 may be formed by means of an indentation in the interior wall of the mold aligned with perforation 15. The plastic material thus introduced into indentation 24 is allowed to cool and/or react, and the tubular assembly is removed from the mold.

The plastic material: (i) molded through the perforations (e.g., perforations 15 and 47) and into the indentations aligned therewith of the other tube (e.g., indentations 24 and 59); and/or (ii) molded onto exterior surface 38 of first tube 12 and/or interior surface 26 of second tube 21, may be selected independently from thermoset plastic materials and/or thermoplastic materials.

As used herein and in the claims the term "thermoset plastic material" and similar terms means plastic materials having a three dimensional crosslinked network resulting from the formation of covalent bonds between chemically reactive groups, e.g., active hydrogen groups and free isocyanate groups. Thermoset plastic materials that may be injected into the indentations (e.g., indentations 24 and/or 59) include those known to the skilled artisan, e.g., crosslinked polyurethanes, crosslinked polyepoxides and crosslinked polyesters. Of the thermoset plastic materials, crosslinked polyurethanes are preferred. Thermoset plastic materials may be injected into the indentations and/or onto the surfaces of the first and second tubes by means of the art-recognized process of reaction injection molding. Reaction injection molding of a polyurethane, for example, typically involves, as is known to the skilled artisan, injecting separately, and preferably simultaneously, into the indentations: (i) an active hydrogen functional component (e.g., a polyol and/or polyamine); and (ii) an isocyanate functional component (e.g., a diisocyanate such as toluene diisocyanate, and/or dimers and trimers of a diisocyanate such as toluene diisocyanate). The mold into which the reactive components are injected may optionally be heated to ensure and/or hasten complete reaction of the injected components. Upon complete reaction of the injected components, the mold is opened and the tubular assembly according to the present invention is removed.

As used herein and in the claims, the term "thermoplastic material" means a plastic material that has a softening or melting point, and is substantially free of a three dimensional crosslinked network resulting from the formation of covalent bonds between chemically reactive groups, e.g., active hydrogen groups and free isocyanate groups. Examples of thermoplastic materials that may be injected into the indentations (e.g., indentations 24 and/or 59) include, but are not limited to, thermoplastic polyurethane, thermoplastic polyurea, thermoplastic polyimide, thermoplastic polyamide, thermoplastic polyamideimide, thermoplastic polyester, thermoplastic polycarbonate, thermoplastic polysulfone, thermoplastic polyketone, thermoplastic polypropylene, thermoplastic acrylonitrile-butadiene-styrene and mixtures or thermoplastic compositions containing one or more thereof. Of the thermoplastic materials that may be injected into the indentations, thermoplastic polyamides are preferred. Thermoplastic material may be injected into the indentations and/or onto surfaces of the first and/or second tubes by the art-recognized process of injection molding, in which a molten stream of thermoplastic material, e.g., molten thermoplastic polyamide, is injected into a mold, e.g., an optionally heated mold. Upon cooling the filled mold, the tubular assembly is removed. A preferred thermoplastic material that may be injected into the indentations and/or onto the surfaces of the first and/or second tubes is thermoplastic polyamide, e.g., DURETHAN thermoplastic polyamide, commercially available from Bayer Polymers LLC.

The thermoset plastic materials and/or thermoplastic materials injected into indentations and/or onto the surfaces of the first and/or second tubes, may optionally be reinforced with a material selected from glass fibers, carbon fibers, metal fibers, polyamide fibers and mixtures thereof. The reinforcing fibers, and the glass fibers in particular, may have sizings on their surfaces to improve miscibility and/or adhesion to the plastics into which they are incorporated, as is known to the skilled artisan. Glass fibers are a preferred reinforcing material in the present invention. If used, the reinforcement material, e.g., glass fibers, is typically present in the thermoset plastic materials and/or thermoplastic materials, injected into the indentations and/or onto surfaces of the first and/or second tubes, in a reinforcing amount, e.g., in an amount of from 5 percent by weight to 60 percent by weight, based on the total weight of the plastic material injected / molded on.

The thermoset plastic materials and/or thermoplastic materials injected into indentations and/or onto the surfaces of the first and/or second tubes, may further optionally contain one or more functional additives. Additives that may be present in the injected plastic material include, but are not limited to, antioxidants, colorants, e.g., pigments and/or dyes, mold release agents, fillers, e.g., calcium carbonate, ultraviolet light absorbers, fire retardants and mixtures thereof. Additives may be present in the injected plastic material in functionally sufficient amounts, e.g., in amounts independently from 0.1 percent by weight to 10 percent by weight, based on the total weight of the plastic material injected.

First tube 12 and second tube 21 may each independently be fabricated from a material selected from metal, thermoplastic material, thermosetting material and combinations thereof. Metals that may be used include, but are not limited to, iron, aluminum, steel, stainless steel, titanium and combinations thereof. Thermoplastic and thermoset plastic materials that may be used include those examples as recited previously herein. In addition, the thermoset and/or thermoplastic materials from which first tube 12 and second tube 21 may be fabricated may optionally contain functional additives (e.g., as recited previously herein) and/or be reinforced with a material selected from, for example, glass fibers, carbon fibers, metal fibers, polyamide fibers and mixtures thereof. Reinforcing materials may be used in amounts as recited previously herein. Functional additives may be present in amounts as recited previously herein. In a preferred embodiment, first tube 12 and second tube 21 are each independently fabricated from metal.

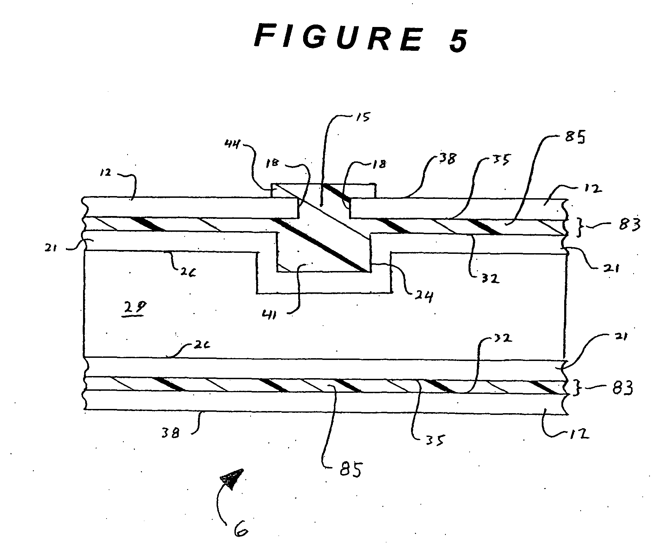

In an embodiment of the present invention, the interior surfaces of the first tube and the exterior surfaces of the second tube define an annular space, and the plastic material, that is molded into indentations, extends at least partially into the annular space. With reference to Figure 5, overlap connection region 6 includes an annular space 83 that is defined by interior surface 35 of first tube 12 and exterior surface 32 of second tube 21. Plastic material 41 is molded through perforation 15 of first tube 12, and into indentation 24 of second tube 21. The molded on (or injected) plastic material 41 extends into annular space 83 as plastic material 85. Plastic material 41 extending through perforation 15 into indentation 24 is continuous with attachment head 44 and the plastic material 85 extending into annular space 83. Edges 18 of perforation 15 are embedded in the plastic material extending there through. Plastic material 85 in annular space 83 may be selected from thermoset plastic materials and/or thermoplastic materials, including those examples as recited previously herein. Plastic materials 85 and 41 may be the same or different, but are typically the same.

During the molding of plastic material through perforation 15, and into the indentation 24 and annular space 83, annular space 83 may be maintained by art-recognized means. For example, each of first tube 12 and second tube 21 may be externally supported such that annular space 83 is formed and maintained prior to the injection of plastic material. Alternatively, spacers, such as plastic balls or rods (not shown), may be introduced between interior surface 35 of first tube 12 and exterior surface 32 of second tube 21 to form and maintain annular space 83 prior to the injection of plastic material.

Annular space 83 of Figure 5 may also or alternatively be filled with plastic material 85 by means of molding plastic material through at least one perforation in second tube 21 and into an indentation in the interior surface 35 of first tube 12 (not shown). Preferably, if an annular space is present between the first and second tubes, it is at least partially filled by means of a perforation in first tube 12, as described above.

At least some of the indentations in the exterior surface of the second tube may be in the form of annular grooves, at least one of which is aligned with at least one perforation in the first tube. Alternatively, or in addition thereto, at least some of the indentations in the interior surface of the first tube may be in the form of annular grooves, at least one of which is aligned with at least one perforation in the second tube. When each of the first and second tubes are substantially cylindrical, the association between the perforations, the annular grooves and the plastic material extending therethrough and filling thereof allows the first tube to be rotatable around the second tube (and/or the second tube to be rotatable within the first tube).

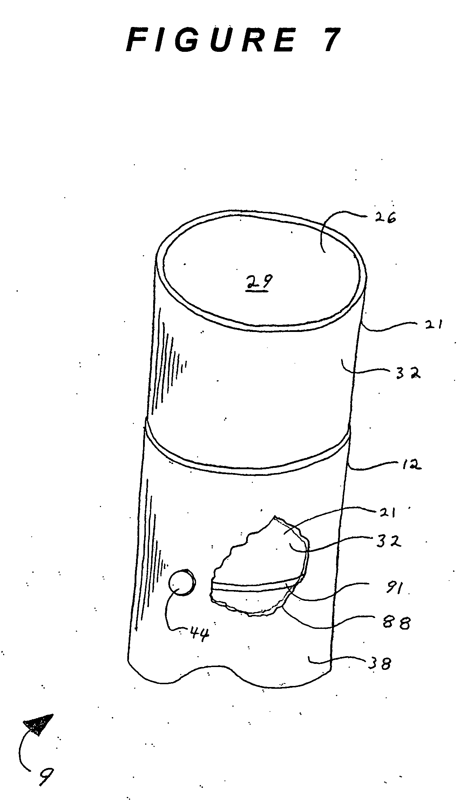

With reference to Figure 7, a representative perspective view of an overlap connection region 9 is depicted. A portion 88 of first tube 12 is cut-away and reveals an underlying annular groove 91 in the exterior surface 32 of second tube 21. Each of first tube 12 and second tube 21 are substantially cylindrical. The plastic material of attachment head 44 is continuous with plastic material (not shown) filling annular groove 88. When rotation of second tube 21 is prevented, first tube 12 of Figure 7 can be rotated about second tube 21. Alternatively, when rotation of first tube 12 is prevented, second tube 21 of Figure 7 can be rotated within and relative to tube 12. Further alternatively, the first and second tubes 12 and 21 may be concurrently rotated in opposite directions relative to each other.

With further reference to Figure 7, rotation of tubes 12 and 21 relative to each other, can be enhanced by increasing the lubricity between the plastic material injected into annular groove 91 and the material of second tube 21 which defines groove 88 (i.e., the walls of groove 88). Increased lubricity can be achieved by means of appropriate selection of injected plastic material and the material from which second tube 21 is fabricated, or by means of introducing a lubricating agent into groove 88 prior to injection of plastic material, as is known to the skilled artisan.

Tubular assemblies according to the present invention may form at least part of tubular frames that are used in a wide variety of applications and markets. For example, the tubular assemblies of the present invention may be used in applications including, but not limited to: chairs, such as aircraft and automotive seats; wheel chairs; walkers (to assist in ambulating); canes; aircraft and automotive space frames; and motorcycle and bicycle frames.

The present invention has been described with reference to specific details of particular embodiments thereof. It is not intended that such details be regarded as limitations upon the scope of the invention except insofar as and to the extent that they are include in the accompanying claims.

## Claims

1. A tubular assembly comprising:
(a) a first tube having interior and exterior surfaces; and
(b) a second tube having interior and exterior surfaces, a portion of said second tube residing within a portion of said first tube,
wherein at least one of,
(i) said first tube has a plurality of perforations having edges, and the exterior surface of said second tube has a plurality of indentations therein, at least some of said perforations and said indentations being aligned, and
(ii) the interior surface of said first tube has a plurality of indentations therein, and said second tube has a plurality of perforations having edges, at least some of said perforations and said indentations being aligned,
further wherein, said tubular assembly is prepared by a process comprising molding plastic material through at least some of said perforations and into said aligned indentations, the edges of said perforations being embedded in the plastic material extending therethrough, thereby fixedly attaching said first tube and said second tube together.

2. The tubular assembly of Claim 1 wherein a portion of the exterior surfaces of said second tube abut a portion of the interior surfaces of said first tube.

3. The tubular assembly of Claim 1 wherein each of said first tube and second tube are independently selected from substantially cylindrical tubes, substantially elliptical tubes, polygonal tubes and combinations thereof.

4. The tubular assembly of Claim 3 wherein each of said first and second tubes are substantially cylindrical tubes.

5. The tubular assembly of Claim 1 wherein said indentations are of greater dimension than the perforations aligned therewith.

6. The tubular assembly of Claim 1 wherein said first tube has a plurality of perforations having edges, the exterior surface of said second tube has a plurality of indentations therein, at least some of said perforations and said indentations being aligned, and the plastic material extending through said perforations and into said aligned indentations is continuous with a molded on attachment head of plastic material on the exterior surface of said first tube.

7. The tubular assembly of Claim 1 wherein the interior surface of said first tube has a plurality of indentations therein, said second tube has a plurality of perforations having edges, at least some of said perforations and said indentations being aligned, and the plastic material extending through said perforations and into said aligned indentations is continuous with a molded on attachment head of plastic material on the interior surface of said second tube.

8. The tubular assembly of Claim 1 wherein said first tube has a plurality of perforations having edges, the exterior surface of said second tube has a plurality of indentations therein, at least some of said perforations and said indentations are aligned, and the plastic material extending through said perforations and into said aligned indentations is continuous with molded on plastic material encasing at least a portion of the exterior surface of said first tube.

9. The tubular assembly of Claim 1 wherein the interior surface of said first tube has a plurality of indentations therein, said second tube has a plurality of perforations having edges, at least some of said perforations and said indentations are aligned, and the plastic material extending through said perforations and into said aligned indentations is continuous with molded on plastic material encasing at least a portion of the interior surface of said second tube.

10. The tubular assembly of Claim 1 wherein said first tube and second tube are each independently fabricated from a material selected from metal, thermoplastic material, thermoset plastic material and combinations thereof.

11. The tubular assembly of Claim 10 wherein said first and second tubes are each independently fabricated from metal.

12. The tubular assembly of Claim 1 wherein the plastic material molded through said perforations and into said aligned indentations is selected from thermoset plastic materials, thermoplastic materials and combinations thereof.

13. The tubular assembly of Claim 12 wherein the plastic material molded through said perforations and into said aligned indentations is a thermoplastic material selected from the group consisting of thermoplastic polyurethane, thermoplastic polyurea, thermoplastic polyimide, thermoplastic polyamide, thermoplastic polyamideimide, thermoplastic polyester, thermoplastic polycarbonate, thermoplastic polysulfone, thermoplastic polyketone, thermoplastic polypropylene, thermoplastic acrylonitrile-butadiene-styrene and thermoplastic compositions containing one or more thereof.

14. The tubular assembly of Claim 12 wherein the plastic material molded through said perforations and into said aligned indentations is reinforced with a material selected from glass fibers, carbon fibers, metal fibers, polyamide fibers and mixtures thereof.

15. The tubular assembly of Claim 1 wherein a portion of the exterior surfaces of said second tube and a portion of the interior surfaces of said first tube together define an annular space, the plastic material molded through said perforations and into said aligned indentations also extends continuously and at least partially into said annular space.

16. The tubular assembly of Claim 1 wherein at least some of said perforations have deformed edge portions, the deformed edge portions being embedded in the plastic material extending therethrough.

17. The tubular assembly of Claim 1 wherein said first tube has a plurality of perforations having edges, and the exterior surface of said second tube has a plurality of indentations therein, said indentations being in the form of annular grooves, at least one of said annular grooves being filled substantially completely with the plastic material molded through at least one perforation aligned therewith.

18. The tubular assembly of Claim 17 wherein each of said first and second tubes are substantially cylindrical tubes.

19. The tubular assembly of Claim 18 wherein at least one of (i) said first tube is rotatable around said second tube, and (ii) said second tube is rotatable within said first tube.

20. The tubular assembly of Claim 1 wherein the interior surface of said first tube has a plurality of indentations therein, and said second tube has a plurality of perforations having edges, said indentations being in the form of annular grooves, at least one of said annular grooves being filled substantially completely with the plastic material molded through at least one perforation aligned therewith.

21. The tubular assembly of Claim 20 wherein each of said first and second tubes are substantially cylindrical tubes.

22. The tubular assembly of Claim 21 wherein at least one of (i) said first tube is rotatable around said second tube, and (ii) said second tube is rotatable within said first tube.
